Europäisches Patentamt

European Patent Office

Office européen des brevets

(11) Publication number: **0 042 710**
**B1**

## (12) EUROPEAN PATENT SPECIFICATION

(45) Date of publication of patent specification: **12.03.86**

(51) Int. Cl.⁴: **A 23 L 1/06**

(21) Application number: **81302674.7**

(22) Date of filing: **16.06.81**

(54) **Fruit composition and method of manufacture thereof.**

(30) Priority: **19.06.80 GB 8020014**

(43) Date of publication of application:
**30.12.81 Bulletin 81/52**

(45) Publication of the grant of the patent:
**12.03.86 Bulletin 86/11**

(84) Designated Contracting States:
**AT BE CH DE FR GB IT LI LU NL SE**

(56) References cited:
**DE-A-2 836 140**
**FR-A-2 114 706**
**FR-A-2 142 622**
**GB-A- 781 568**
**GB-A-1 525 123**
**US-A-3 692 541**

(73) Proprietor: **Cadbury Typhoo Limited**
**Bournville**
**Birmingham B30 2LU (GB)**

(72) Inventor: **Wiggett, Alan Robert**
**36 Dovecote Road**
**Bromsgrove, B61 7BP (GB)**
Inventor: **Hebblethwaite, Paul Edward**
**Old Broom Cottage 15 Malvern Road**
**Rednal Birmingham (GB)**
Inventor: **Peters, David John**
**24 Merridale Ave**
**Merridale Wolverhampton (GB)**

(74) Representative: **Pearce, Anthony Richmond**
**et al**
**Marks & Clerk Alpha Tower Suffolk Street**
**Queensway Birmingham B1 1TT (GB)**

**The file contains technical information submitted after the application was filed and not included in this specification**

Courier Press, Leamington Spa, England.

## Description

This invention relates to a fruit composition and to a method of manufacture thereof, and in particular the invention relates to a spreadable fruit composition or low sugar jam or marmalade.

In the case of spreadable fruit compositions, under current legislation, jam or marmalade compositions in the United Kingdom must have a total soluble solids content of at least 65% by weight and the use of an artificial preservative is prohibited. In other parts of Europe, low-sugar jams or marmalades having a total soluble solids content of less than 65% by weight and containing sorbic acid or one of its salts as a perservative, are permitted. However, such low-sugar jams or marmalades do not have the same texture as the high-sugar jams and marmalades sold in the United Kingdom. This is because high-sugar preserves (i.e. preserves having a total soluble solids content of at least 65% by weight) have stronger gel and are much more resistant to syneresis than low-sugar preserves. Syneresis is the 'weeping' of the gel i.e. the release of sugar syrup, when the gel is broken by removing a portion of the preserve with a spoon, for example.

A gelling mixture is proposed in DE—A—2836140 which consists of the following components.

| | |
|---|---|
| weakly esterified pectin | 0.37 —0.45 wt% |
| K-carragheenan | 0.185—0.227 wt% |
| locust bean gum | 0.123—0.186 wt% |
| malic aid | 0.123—0.186 wt% |
| potassium citrate | 0.123—0.186 wt% |
| xylitol | 0.309—0.379 wt% |

The presence of weakly esterified pectin, K-carragheenan and locust bean gum all being necessary to effect gelling of a composition.

It is an object of the present invention to provide a low-sugar fruit composition which more nearly matches the characteristics of gel stability and rigidity possessed by conventional high sugar preserves.

According to the present invention, there is provided a spreadable fruit composition having a fruit content of 10 to 50%, preferably 30 to 50% by weight and a total soluble solids content of 30 to 55% preferably 40 to 50% by weight provided by any one or more sugars (e.g. sucrose, glucose, fructose) together with, if desired, the addition of one or more artificial sweeteners (e.g. saccharin) to attain the desired level of sweetness in the final composition, and including a gelling material comprising (a) 0.5 to 1.0%, preferably 0.6 to 0.9% by weight of low methoxyl pectin, and (b) 0.05% to 0.50% by weight of a gel thickener (e.g. agar, carboxymethyl cellulose, or an edible gum such as locust bean, xanthan or guar gum), the composition also including 250 to 1000 ppm (by weight) of a permitted preservative e.g. sorbic acid or potassium sorbate.

As is usual with jams and other spreadable compositions, it is important to maintain the required acidity in the composition and also to control the degree of gelation by controlling the available calcium ions present in the composition. This is well understood by a person skilled in the art and a suitable pH range for the composition is 3.0 to 4.2, preferably 3.2 to 3.5. Depending upon the available calcium ion concentration of the raw ingredients used to form the composition, additional calcium ions or a sequestering agent, e.g sodium hexametaphosphate or tetra sodium pyrophosphate, may be required to control the calcium ion concentration. The amount of calcium ions or sequestering agent required is usually determined on a trial and experiment basis because of the high number of factors which affect the degree of gelation of the particular composition being produced. Factors which affect the calcium ion concentration are the hardness of the water, the type of fruit, and the form in which the fruit is provided. As a general rule with the spreadable fruit composition, calcium ions will be added into the form of a sparingly soluble calcium salt (e.g. calcium tetrahydrogen diphosphate) to promote gelation where the natural calcium content of the fruit is low and/or where the content of the fruit in the composition is low. A sequestering agent to reduce the available calcium ion concentration may be employed where the fruit content is high and/or where the fruit employed has a high natural calcium content. A sequestering agent may also be employed in cases where calciums ions have been added to the raw fruit used to form the composition.

The thickener is preferably an edible gum. Although the gum may be used in an amount of 0.05 to 0.50% by weight of the composition, it is most preferably used in an amount of about 0.10 to 0.3% by weight. However, the precise amount used depends upon the fruit employed.

The low methoxy pectin (LMP) is present as a gelling agent. The most preferred gelling agent is low methoxyl pectin having a degree of amidation of 18 to 22% and a degree of esterification of 28 to 34%, although low methoxyl pectins with degrees of amidation of 15 to 30% and degrees of esterification of 25 to 40% will also perform adequately.

Subject to the preferred operation parameters mentioned above, the amounts of LMP and gel thickener which are typically used for various ranges of the total soluble solids (TSS) content are set out in the Table below:

## TABLE

| % TSS range | LMP % by wt. | Gel thickners % by wt. |
|---|---|---|
| 30 to 35 | 0.5 to 0.7 | 0.3 to 0.5 |
| 35 to 40 | 0.5 to 0.7 | 0.3 to 0.5 |
| 40 to 45 | 0.6 to 1.0 | 0.3 to 0.5 |
| 45 to 50 | 0.6 to 0.9 | 0.15 to 0.3 |
| 50 to 55 | 0.6 to 0.8 | 0.05 to 0.2 |

Also according to the present invention, there is provided a method of manufacturing a spreadable fruit composition comprising the steps of heating fruit, sugar and water at atmospheric or reduced pressure to cook the fruit and cause the sugar to be absorbed into the fruit, and then adding low methoxyl pectin (LMP) and a gel thickener (e.g. carboxyl methyl cellulose or an edible gum such as a locust bean, xanthan or guar gum), to the cooked mixture; the fruit, sugar, water, LMP, gel thickener and a preservative (e.g. potassium sorbate), and optionally one or more artificial sweeeteners, being included in amounts such as to give a composition having a fruit content of 10 to 50%, preferably 30 to 50% by weight; a total soluble solids content of 30 to 55% preferably 40 to 50% by weight, an LMP content of 0.5 to 1.0% by weight, a gel thickener content of 0.05 to 0.50% by weight, and a preservative content of 250 to 1000 ppm by weight.

Examples of the present invention will now be described. In the following examples, the weight percentages of the ingredients are the weight percentages in the final composition.

Example 1

A frozen fruit composition containing 4 parts by weight of frozen strawberries and one part by weight of a mixture of sucrose and calcium lactate, sugar, water and permitted colour were added to a boiling pan in an amount such as to give 38% by weight of fruit and a total soluble solids content of 50% by weight in the final composition. Sodium citrate was also added to the boiling pan in order to maintain a pH in the range of 3.2 to 3.4 in the final composition. The resultant composition was heated in the boiling pan for 15 minutes at a temperature of 85°C under a pressure of 380 mm of mercury. Following this, 0.3% dry weight of sodium hexametaphosphate, 0.85% by wt, of low methoxyl pectin having a degree of amidation of 18 to 22% and a degree of esterification of 28 to 34% and 0.18% by weight of guar gum were added to the cooked mixture together with 500 ppm of potassium sorbate. After this, the resultant mixture was cooled to 75°C and 0.5% by weight of citric acid was added to impart a tanginess to the final composition.

The final composition was a spreadable fruit composition having a strong gel and was more resistant to syneresis even than a conventional high-sugar strawberry jam containing at least 65% by weight of total soluble solids.

Example 2

In the preparation of a low-sugar orange jelly marmalade having a fruit content of 30% by weight and a TSS of 50% by weight a mixture of clarified orange extract and drained peel were mixed with sugar, water, permitted colouring and sodium citrate (0.6% weight of a 30% solution). To this mixture was added sufficient calcium tetrahydrogen diphosphate in solution to bring the calcium ion concentration in the mixture to between 20—50 mg. calcium/g of pectin, preferably 30 to 35 mg.

The mixture was cooked as described in Example 1. To the resulting mixture was added 0.8% by weight low methoxyl pectin, 0.18% guar gum and 500 ppm potassium sorbate. Citric acid was added to bring the pH to 3.2 to 3.4. The resultant composition was a spreadable gel of good strength and good resistance to syneresis.

Example 3

Frozen raspberries, sugar (sucrose), water, sodium citrate, and permitted colouring were added to a boiling pan in an amount such as to give a fruit content of 30% by weight a total soluble solids content of 50% by weight and a pH of 3.2 to 3.4 in the final composition. The mixture was heated to boiling at 82 to 85°C under a pressure of 380 mm of mercury for 5 to 10 minutes. During this time, some evaporation took place. Following this 0.85% by weight of the low methoxyl pectin, having a degree of amidation of 18 to 22% and a degree of esterification of 28 to 34%, 0.3% by weight of sodium alginate and 0.15% by weight of guar gum were added to the mixture along with 500 ppm of potassium sorbate. The mixture was stirred sufficiently to disperse the added ingredients thoroughly and then the resulting mixture was cooled.

The final composition was a spreadable fruit composition having a texture which was very close to that of a conventional jam having a total soluble solids content at least 65% by weight and, in particular, the final composition had a stronger gel and was much more resistant to syneresis than a conventional low sugar preserve.

Example 4

In the preparation of a low sugar high fruit raspberry jam the method was as described in Example 3 except that the frozen raspberries were used in an amount such as to give a fruit content of 50% by weight and sufficient sugar was added to give a TSS content of 50% by weight, and also 0.8% by weight of the low methoxyl pectin and 0.1% by weight xanthan gum (instead of guar gum as the gel thickener) were added, together with 500 ppm of potassium sorbate and the requisite amount of citric acid and sodium citrate to impart desirable acidity and pH in the range 3.2 and 3.4. 0.3% by weight of tetrasodiumpyrophosphate was also added.

The resultant composition had a strong fruit flavour, a good resistance to synersis and spread well.

In all of the above examples, the final composition was filled into jars at a temperature of 75°C. However, the filling temperature could be anywhere in the range of 60°C to 85°C.

The processing temperature may be anywhere in the range of 70°C and 105°C depending upon the pressure employed.

## Claims

1. A spreadable fruit composition having a fruit content of 10 to 50% by weight and a total soluble solids content of 30 to 55% by weight provided by one or more sugars together with the optional addition of one or more artificial sweeteners; and including a gelling material comprising (a) 0.5 to 1.0% by weight of low methoxyl pectin and (b) 0.05 to 0.50% by weight of a gel thickener, the composition also including 250 to 1000 ppm by weight of a permitted preservative.

2. A composition as claimed in Claim 1, having a fruit content of 30—50% by weight.

3. A composition as claimed in Claim 1 or 2, having a total soluble solids content of 40—50% by weight.

4. A composition as claimed in any preceding claim wherein the thickener is an edible gum.

5. A composition as claimed in Claim 4, wherein the edible gum is present in an amount of 0.10 to 0.3% by weight of the composition.

6. A composition as claimed in Claim 4 or 5, wherein the edible gum is locust bean gum.

7. A composition as claimed in Claim 4 or 5, wherein the edible gum is xanthan gum.

8. A composition as claimed in Claim 4 or 5, wherein the edible gum is guar gum.

9. A composition as claimed in any preceding claim, wherein the low methoxyl pectin has a degree of amidation of 15 to 30% and a degree of esterification of 25 to 40%.

10. A composition as claimed in any one of claims 1—8, wherein the low methoxyl pectin has a degree of amidation of 18 to 22% and a degree of esterification of 28 to 34%.

11. A composition as claimed in any one of claims 1—8, wherein the low methoxyl pectin has a degree of amidation of 19 to 24% and a degree of esterification of 25 to 30%.

12. A composition as claimed in any one of claims 1 to 11, wherein said low methoxyl pectin is present in an amount of 0.6 to 0.9% by weight of the composition.

13. A method of manufacturing a spreadable fruit composition comprising the steps of heating fruit, sugar and water at atmospheric or reduced pressure to cook the fruit and cause the sugar to be absorbed into the fruit, and then adding low methoxyl pectin and a gel thickener to the cooked mixture; the fruit, sugar, water, low methoxyl pectin, gel thickener and a preservative, and optionally one or more artificial sweeteners, being included in amounts such as to give a spreadable fruit composition having fruit content of 10 to 50% by weight, a low methoxyl pectin content of 0.5 to 1.0% by weight a gel thickener content of 0.05 to 0.50% by weight and a preservative content of 250 to 1000 ppm by weight.

## Patentansprüche

1. Streichfähige Fruchtmasse eines Fruchtgehalts von 10 bis 50 Gew.-% und eines Gesamtgehalts an löslichen Feststoffen, der von mindestens einem Zucker und mindestens einem gegebenfalls zugesetzten künstlichen Süßstoff herrührt, von 30 bis 55 Gew.-%, die ein Geliermittel aus (a) 0,5 bis 1,0 Gew.-% eines Pektins niedrigen Methoxylgruppengehalts und (b) 0,05 bis 0,50 Gew.-% eines Geldickungsmittels sowie ferner 250 bis 1000 (Gewichts) ppm eines zugelassenen Konservierungsmittels enthält.

2. Masse nach Anspruch 1, dadurch gekennzeichnet, daß sie einen Fruchtgehalt von 30 bis 50 Gew.-% aufweist.

3. Masse nach einem der Ansprüche 1 oder 2, dadurch gekennzeichnet, daß sie einen Gesamtgehalt von löslichen Feststoffen von 40 bis 50 Gew.-% aufweist.

4. Masse nach einem der vorhergehenden Ansprüche, dadurch gekennzeichnet, daß sie als Dickungsmittel einen eßbaren Gummi enthält.

5. Masse nach Anspruch 4, dadurch gekennzeichnet, daß sie (bezogen auf das Gewicht der Masse) 0,10 bis 0,3 Gew.-% eßbaren Gummi enthält.

6. Masse nach einem der Ansprüche 4 oder 5, dadurch gekennzeichnet, daß sie als eßbaren Gummi Johannisbrotgummi enthält.

7. Masse nach einem der Ansprüche 4 oder 5, dadurch gekennzeichnet, daß sie als eßbaren Gummi Xanthangummi enthält.

8. Masse nach einem der Ansprüche 4 oder 5, dadurch gekennzeichnet, daß sie als eßbaren Gummi Guargummi enthält.

9. Masse nach einem der vorhergehenden Ansprüche, dadurch gekennzeichnet, daß das Pektin niedrigen Methoxylgruppengehalts einen Amidierungsgrad von 15 bis 30% und einen Veresterungsgrad von 25 bis 40% aufweist.

10. Masse nach einem der Ansprüche 1 bis 8, dadurch gekennzeichnet, daß das Pektin niedrigen Methoxylgruppengehalts einen Amidierungsgrad von 18 bis 22% und einen Veresterungsgrad von 28 bis 34% aufweist.

11. Masse nach einem der Ansprüche 1 bis 8, dadurch gekennzeichnet, daß das Pektin niedrigen Methoxylgruppengehalts einen Amidierungsgrad von 19 bis 24% und einen Veresterungsgrad von 25 bis 30% aufweist.

12. Masse nach einem der Ansprüche 1 bis 11, dadurch gekennzeichnet, daß sie (bezogen auf das Gewicht der Masse) 0,6 bis 0,9 Gew.-% Pektin niedrigen Methoxylgruppengehalts enthält.

13. Verfahren zur Herstellung einer Streichfähigen Fruchtmasse, dadurch gekennzeichnet, daß man Früchte, Zucker und Wasser bei atmosphärischem oder vermindertem Druck erwärmt, um die Früchte zu kochen und eine Absorption des Zuckers in den Früchten herbeizuführen, und daß man danach dem gekochten Gemisch Pektin niedrigen Methoxylgruppengehalts und ein Geldickungsmittel zusetzt, wobei die Früchte, der Zucker, Wasser, das Pektin niedrigen Methoxylgruppengehalts, das Geldickungsmittel und ein Konservierungsmittel sowie gegebenenfalls mindestens einen künstlichen Süßstoff in solchen Mengen zum Einsatz bringt, daß man eine streichfähige Fruchtmasse eines Fruchtgehalts von 10 bis 50 Gew.-%, eines Gehalts an Pektin niedrigen Methoxylgruppengehalts von 0,5 bis 1,0 Gew.-%, eines Gehalts an Geldickungsmittel von 0,05 bis 0,50 Gew.-% und eines Gehalts an Konservierungsmittel von 250 bis 1000 (Gewichts) ppm erhält.

**Revendications**

1. Composition de fruit pouvant être étalée ayant une teneur en fruits de 10 à 50% en poids et une teneur totale en matières solides de 30 à 55% en poids, constituée par un ou plusieurs sucres, en commun avec l'addition éventuelle d'un ou plusieurs édulcorants artificiels; et comprenant une matière gélifiante constituée par (a) 0,5 à 1% en poids de pectine faiblement méthoxylée et (b) 0,05 à 0,50% en poids d'un épaississant de gel, la composition comprenant également 250 à 1000 ppm en poids d'un agent conservateur autorisé.

2. Composition selon la revendication 1, ayant une teneur en fruits de 30 à 50% en poids.

3. Composition selon les revendications 1 ou 2, ayant une teneur totale en matières solides de 40 à 50% en poids.

4. Composition selon l'une quelconque des revendications précédentes, caractérisée en ce que l'épaississant est une gomme comestible.

5. Composition selon la revendication 4, caractérisée en ce que la gomme comestible est présente dans une proportion de 0,10 à 0,3% en poids de la composition.

6. Composition selon les revendications 4 ou 5, caractérisée en ce que la gomme comestible est de la gomme de fève de locuste.

7. Composition selon les revendications 4 ou 5, caractérisée en ce que la gomme comestible est de la gomme de xanthane.

8. Composition selon les revendications 4 ou 5, caractérisée en ce que la gomme comestible est de la gomme de guar.

9. Composition selon l'une quelconque des revendications précédentes, caractérisée en ce que la pectine faiblement méthoxylée présente un degré d'amidation de 15 à 30% et un degré d'estérification de 25 à 40%.

10. Composition selon l'une quelconque des revendications 1 à 8, caractérisée en ce que la pectine faiblement méthoxylée présente un degré d'amidation de 18 à 22% et un degré d'esterification de 28 à 34%.

11. Composition selon l'une quelconque des revendications 1 à 8, caractérisée en ce que la pectine faiblement méthoxylée présente un degré d'amidation de 19 à 24% et un degré d'esterification de 25 à 30%.

12. Composition selon l'une quelconque des revendications 1 à 11, caractérisée en ce que la pectine faiblement méthoxylée est présente dans une proportion de 0,6 à 0,9% en poids de la composition.

13. Procédé de fabrication d'une composition de fruit pouvant être étalée, comprenant les étapes de chauffage du fruit, du sucre et de l'eau sous pression atmosphérique ou réduite, afin de faire cuire le fruit et provoquer l'absorption du sucre par le fruit, puis addition de pectine faiblement méthoxylée et d'un épaississant de gel au mélange cuit; les fruit, sucre eau, pectine faiblement méthoxylée, épaississant de gel et un conservateur, et éventuellement un ou plusieurs édulcorants artificiels, étant inclus dans les proportions de façon à produire une composition de fruit à étaler ayant une teneur en fruit de 10 à 50% en poids, une teneur en pectine faiblement méthoxylée de 0,5 à 1% en poids, une teneur en épaississant de gel de 0,05 à 0,50% en poids et une teneur en conservateur de 250 à 1000 ppm en poids.